# EUROPÄISCHE PATENTSCHRIFT

(11) **EP 3 939 148 B1**
(45) Veröffentlichungstag und Bekanntmachung des Hinweises auf die Patenterteilung: **15.11.2023**
(21) Anmeldenummer: 20711157.6
(22) Anmeldetag: 12.03.2020
(51) Int. Cl.: H02K 3/52, H02K 11/38, H02K 5/04, H02K 7/116

(54) **ANTRIEBSVORRICHTUNG MIT EINEM BÜRSTENLOSEN ELEKTROMOTOR**
DRIVE DEVICE WITH A BRUSHLESS ELECTRIC MOTOR
DISPOSITIF D'ENTRAÎNEMENT À MOTEUR ÉLECTRIQUE SANS BALAIS

(30) Priorität: 15.03.2019 DE 102019203525
(43) Veröffentlichungstag der Anmeldung: 19.01.2022
(73) Patentinhaber: Brose Fahrzeugteile SE & Co. Kommanditgesellschaft, Bamberg, 96052 Bamberg (DE)
(72) Erfinder: CHRISTIAN, Uwe, 96275 Marktzeuln (DE); KALB, Roland, 96269 Rossach (DE); LANGE, Gabriele, 96364 Marktrodach (DE); PFALZGRAF, Helmut, 97246 Eibelstadt (DE); STRAUSS, Wolfgang, 97294 Unterpleichfeld (DE)
(74) Vertreter: FDST Patentanwälte
(86) Internationale Anmeldenummer: PCT/EP2020/056702
(87) Internationale Veröffentlichungsnummer: WO 2020/187703

(56) Entgegenhaltungen:
- DE-A1-102016 216 888
- US-A1- 2013 169 086
- US-A1- 2014 183 992
- US-A1- 2017 366 070
- US-A1- 2018 226 857
- US-B1- 6 177 741
- US-B1- 6 211 631

## Beschreibung

Die Erfindung betrifft eine Antriebsvorrichtung, insbesondere einen elektromotorischen Verstellantrieb eines Kraftfahrzeugs, mit einem Antriebsgehäuse und mit einem darin montierbaren Außenläufermotor als bürstenlosem Elektromotor mit einer Statorwicklung und mit einem Rotor mit einer mit einem Getriebe gekoppelten oder koppelbaren Rotorwelle sowie mit einer Motorelektronik mit einer Leiterplatte. Eine derartige Antriebsvorrichtung ist aus der DE 10 2016 216 888 A1 bekannt.

Eine Antriebsvorrichtung, die beispielsweise als elektromotorischer Verstellantrieb eines Kraftfahrzeugs ein Stellelement zwischen zwei Endpositionen entlang eines Verstellweges antreibt, umfasst üblicherweise einen Elektromotor und ein mit diesem gekoppeltes Getriebe, das in einem Antriebs- bzw. Getriebegehäuse angeordnet ist. Das Getriebegehäuse ist mit dem Motorgehäuse üblicherweise über eine flanschartige Anbindung verbunden, wobei der Elektromotor typischerweise ein bürstenbehafteter Innenläufer-Kommutatormotor ist. Derartige Antriebsvorrichtungen, insbesondere Fensterheberantriebe, sind Regel am bestimmungsgemäßen Einbauort unter Umständen extremer Feuchtigkeit und hohen Temperaturschwankungen ausgesetzt.

Bei einer aus der DE 10 2011 121 716 B3 bekannten Antriebsvorrichtung, insbesondere eines elektromotorischen Verstellantriebs eines Kraftfahrzeugs, sind das Getriebe und der als Innenläufer ausgeführte Elektromotor in getrennten Gehäusen angeordnet. In einem Gehäuseanschlussbereich für den Elektromotor ist eine Gehäuseöffnung vorgesehen, die mittels einer gasdurchlässigen und insbesondere flüssigkeitsundurchlässigen Membran abgedeckt ist, um einen Druckausgleich des Gehäuseinnenraums mit der Umgebung bzw. dem Gehäuseaußenraum hergestellt.

Wird für eine derartige Antriebsvorrichtung ein bürstenloser Elektromotor eingesetzt, dessen Stator eine mehrphasige, üblicherweise dreiphasige Drehstromwicklung aufweist, sind die Phasenanschlüsse mit einer die Drehstromwicklung bestromenden Motorelektronik zu kontaktieren. Die elektrische Verbindung der Phasenanschlüsse mit einer Leiterplatte, auf welcher die elektrischen und/oder elektronischen Bauteile der Motorelektronik montiert und untereinander verbunden sind, erfolgt durch vergleichsweise aufwendiges manuelles Verlöten oder mittels Steckverbindungen. Eine solche Steckverbindung, die in der Regel für jede der typischerweise drei Phasen zwei Bauteile (Metallteile) in Form eines Klemm- und/oder Messerkontaktes für den jeweiligen Phasenanschluss und eines Gegen- oder Gabelkontaktes auf der Leiterplatte benötigt, ist vergleichsweise bauteil- und bauraumintensiv.

Der Erfindung liegt die Aufgabe zugrunde, eine Antriebsvorrichtung mit verbessertem Anschlusskonzept für die Phasenanschlüsse eines bürstenlosen Elektromotors anzugeben.

Diese Aufgabe wird erfindungsgemäß gelöst durch die Merkmale des Anspruchs 1. Vorteilhafte Weiterbildungen und Ausgestaltungen sind Gegenstand der Unteransprüche.

Die erfindungsgemäße Antriebsvorrichtung, insbesondere eines elektromotorischen Verstellantriebs eines Kraftfahrzeugs, weist ein Antriebsgehäuse mit darin montierbarem, bürstenlosem Elektromotor auf. Der Elektromotor weist einen Stator mit einer Drehfeldwicklung und einen Rotor mit einer Rotorwelle auf, die mit einem Getriebe gekoppelt oder mit diesem koppelbar ist. Der Elektromotor und das Getriebe sind vorteilhafterweise in einem gemeinsamen, mittels eines Gehäusedeckels verschließbaren Gehäusegrundkörper des Antriebsgehäuse angeordnet. Eine Motorelektronik mit einer Leiterplatte ist ebenfalls in diesem Antriebsgehäuse angeordnet.

Der Elektromotor ist vorteilhafterweise in das Antriebsgehäuse bzw. in dessen Gehäusegrundkörper über eine Gehäuseöffnung einführbar. Während dieses Montageschritts ist die Leiterplatte der Motorelektronik, die im Wesentlichen die mit den entsprechenden (elektrischen, elektronischen) Bauteilen bestückte Leiterplatte mit einer Anschlussschnittstelle zur Steckkontaktierung eines an einem Anschlusskabel vorgesehenen Anschlusssteckers aufweist, bereits im Antriebsgehäuse positioniert.

Der Stator des Elektromotors, der ein Außenläufermotor ist, weist einen Statorgrundkörper mit einer Anzahl von sternförmig angeordneten Statorzähne auf, die mit der Drehfeldwicklung bewickelt sind. Der Statorgrundkörper ist außenverzahnt und weist eine zentrale Wellendurchführung für die Rotorwelle auf. Der Rotor des Elektromotors weist ein den Statorgrundkörper umgebendes und mit der Rotorwelle gekoppeltes Rotorgehäuse mit darin angeordneten Permanentmagneten auf.

Die statorseitige Drehfeldwicklung weist eine Anzahl von Phasenanschlüssen auf, die in eine radial orientierte Fügeposition geführt sind. Dies bedeutet, dass die Phasenanschlüsse, welche die Wicklungs- oder Drahtenden von Einzel-, Doppel- oder Mehrfachspulen der Drehfeldwicklung sind, in eine Position oder Lage gebogen sind, in der eine Fügeverbindung mit korrespondierenden Gegenstrukturen der Leiterplatte ermöglicht ist. Hierzu weist die Leiterplatte eine der Anzahl der Phasenanschlüsse entsprechende Anzahl von Anschlussaufnahmen auf, welche im Zuge des Einführens des Elektromotors in das Antriebsgehäuse die Phasenanschlüssen positionsgenau aufnehmen. Die Anschlussaufnahmen für die Phasenanschlüsse sind - bezogen auf die Motorachse - als axial verlaufende Führungsschlitze ausgebildet, die sich ausgehend von einer dem Statorgrundkörper zugewandten Leiterplattenkante, insbesondere zueinander parallel verlaufend, in die Leiterplatte hinein erstrecken.

Mit anderen Worten sind die Phasenanschlüsse vereinzelt und fügegerechte vorgebogen, wobei die Windungsenden einer jeden Phase einzeln oder gemeinsam aus der statorseitigen Drehfeldwicklung herausgeführt sind, um im Zuge des Einsetztens des Stators mit dessen Drehfeldwicklung und den vorgebogenen Phasenanschlüssen durch die Gehäuseöffnung in das Antriebsgehäuse automatisch, also quasi zwangsgeführt in den Anschlussaufnahmen aufgenommen zu werden. In dieser Steckposition können die Phasenanschlüsse anschließend mit der Leiterplatte selektiv (anschlussspezifisch) verlötet werden, beispielsweise unter Herstellung einer Stern- oder Dreiecksschaltung.

In einer vorteilhaften Ausgestaltung weist die Antriebsvorrichtung bzw. der Elektromotor an einer Stirnseite des Statorgrundkörpers ein hülsenförmiges Führungselement auf. Das Führungselement weist einen zylindrischen Führungsschaft auf, dessen rohrförmige Durchgangsöffnung mit der als Wellendurchführung dienenden Durchgangsöffnung des Statorgrundkörpers fluchtet. Am Außenumfang des Führungsschaft weist Führungselement eine Anzahl von Aufnahmenuten auf, in welchen die Phasenanschlüsse abschnittsweise einliegen. Auf diese Weise sind die Phasenanschlüsse in deren gewünschter Lageorientierung und positioniert sowie ausreichend fixiert.

Zweckmäßigerweise sind die Aufnahmenuten zur Mittelachse (Axialrichtung) des Statorgrundkörpers in einem Winkel zwischen 20° und 70°, insbesondere zwischen 30° und 60°, vorzugsweise zwischen 40° und 50°, besonders bevorzugt zwischen 45° und 50°, schräg verlaufend orientiert.

Die Leiterplatte der Motorelektronik ist innerhalb des Antriebsgehäuses radial beabstandet zur Rotorwelle angeordnet. Die Anschlussaufnahmen für die Phasenanschlüsse weisen geeigneterweise Einführschrägen auf, so dass die Phasenanschlüsse im Zuge der Steckmontage des Elektromotors über die Gehäuseöffnung in das Antriebsgehäuse fehlersicher und positionsgenau in die Anschlussaufnahmen der Leiterplatte eingebrachten werden können. Hierzu sind die Phasenanschlüssen in deren Fügeposition vorteilhafterweise zueinander parallel verlaufend orientiert, insbesondere in einer gemeinsamen, zur Plattenebene der Leiterplatte orthogonalen Fügeebene.

In einer zweckmäßigen Ausgestaltung des Führungselementes weist dieses eine Anzahl von radial verlaufenden Abdeckstegen auf, welche stirnseitig zwischen einer entsprechenden Anzahl von Statorzähnen und der Drehfeldwicklung einliegen. Mit anderen Worten stützt sich das Führungselement mit dessen, vorzugsweise der Anzahl der Statorzähne entsprechenden Anzahl von, Abdeck- oder Sützstegen am Statorgrundkörper und dort an einer dessen Stirnseiten ab. In dieser Montageposition erfolgt die Bewicklung des Statorgrundkörpers mit den Spulen der Drehfeldwicklung. Auf diese Weise ist das Führungselement ohne weitere Verbindungselemente fest am Statorgrundlkörper gehalten.

Die Erfindung bezieht sich auch auf den Elektromotor an sich. Dieser, geeigneterweise als bürstenloser Außenläufermotor ausgeführt Elektromotor weist einen Stator und einen Rotor mit einer Rotorwelle sowie mit einer Motorelektronik mit einer Leiterplatte auf. Der Stator weist einen Statorgrundkörper mit einer Anzahl von sternförmig angeordneten Statorzähne auf, die mit der Statorwicklung (Drehfeldwicklung) versehen (bewickelt) sind. Eine Anzahl von Phasenanschlüssen der Statorwicklung ist in eine, insbesondere radial orientierte, Fügeposition geführt, wobei die Leiterplatte eine der Anzahl der Phasenanschlüsse entsprechende Anzahl von Anschlussaufnahmen aufweist, in welche die Phasenanschlüsse aufgenommen oder aufnehmbar sind.

Nachfolgend wird ein Ausführungsbeispiel der Erfindung anhand einer Zeichnung erläutert. Darin zeigen:
- Fig. 1: in perspektivischer Darstellung die Antriebsvorrichtung mit einem Antriebsgehäuse und darin aufgenommenem Elektromotor zum Antrieb einer Seiltrommel als Abtriebselement einer Verstelleinrichtung, insesondere eines Fensterhebers, eines Kraftfahrzeugs,
- Fig. 2: in einer Darstellung gemäß Figur 1 die Antriebsvorrichtung mit Blich auf den eingesetzten Elektromotor bei entnommenem (Motor-)Gehäusedeckel und ohne Seiltrommel,
- Fig. 3: in einer Explosionsdarstellung die Antriebsvorrichtung mit dem Elektromotor in einer Vormontageposition vor dem Einführen in das Antriebsgehäuse mit Blick in das Antriebgehäuse auf der der Figur 1 gegenüberliegenden Gehäuseseite bei entnommenem (Elektronik-)Gehäusedeckel,
- Fig. 4: einen Ausschnitt IV aus Fig. 3 in größerem Maßstab mit in deren Fügeposition für die Aufnahme in Fügeausnehmungen der Leiterplatte angeordneten Phasenanschlüssen,
- Fig. 5: in einer Darstellung gemäß Figur 4 die Phasenanschlüssen dirkt vor deren Fügeposition in den Ausnehmungen der Leiterplatte
- Fig. 6: in einer Darstellung gemäß Figur 5 die Phasenanschlüssen in deren Endposition in den Ausnehmungen der Leiterplatte,
- Fig. 7: in perspektivischer Darstellung den Stator des Elektromotors mit stirnseitig angeordnetem Führungselement mit einer Anzahl von Aufnahmenuten und radial verlaufenden Abdeckstegen, die gemeinsam mit den Statorzähnen umwickelt sind, und
- Fig. 8: in perspektivischer Darstellung das Führungselement mit hülsenförmigem Führungsschaft und radial verlaufenden Abdeck- bzw. Stützstegen.

Einander entsprechende Teile sind in allen Figuren mit den gleichen Bezugszeichen versehen.

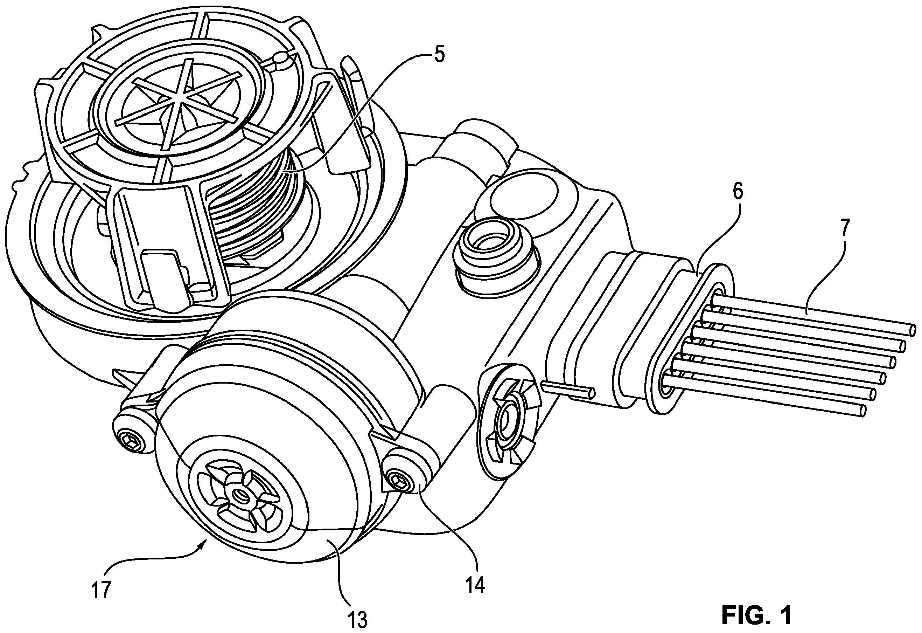

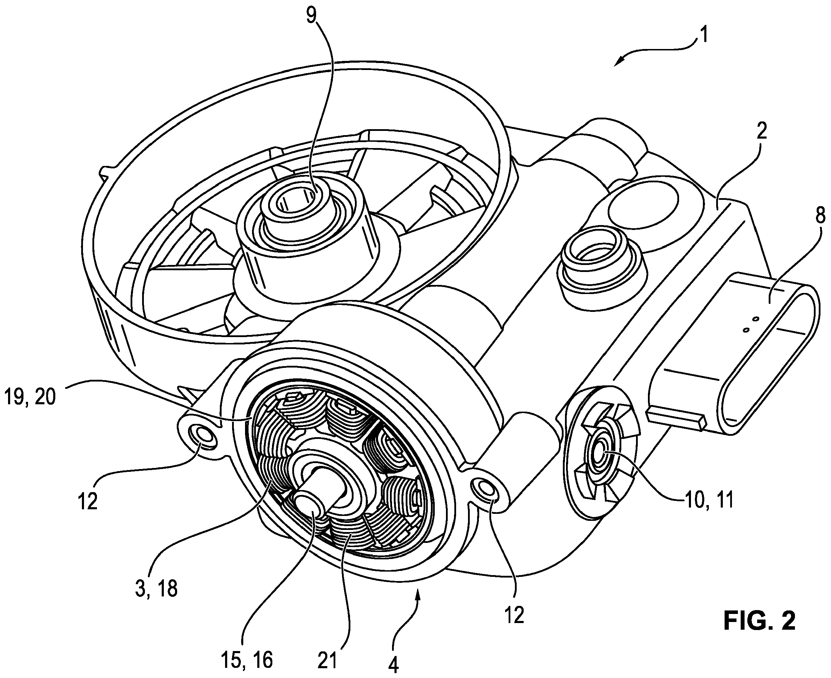

Die Fig. 1 und 2 zeigen in perspektivischer Darstellung eine elektromotorische Antriebsvorrichtung 1 mit einem Antriebsgehäuse 2, in den ein Elektromotor 3 eingesetzt ist. Hierzu weist das Antriebsgehäuse 2 eine Gehäuseöffnung (Einschuböffnung) 4 auf, über welche der Elektromotor 3 in das Antriebsgehäuse 2 einführbar bzw. eingesteckt ist. Der Elektromotor 3 treibt über ein (nicht sichtbares) Getriebe ein Abtriebselement 5 an, welches im Ausführungsbeispiel eine Seiltrommel für ein Zugseil, beispielsweise eines Fensterhebers eines Kraftfahrzeugs, ist. Ein Anschlussstecker 6 mit Anschlussleitungen 7 zur Strom- und Spannungsversorgung der als Verstellantrieb des Kraftfahrzeugs dienenden Antriebsvorrichtung 1 sowie zum Zuführen und/oder Ausleiten von Steuer- bzw. Sensorsignalen wird in eine gehäuseseitigen Anschlussaufnahme 8 eingesteckt.

Das Getriebe der Antriebsvorrichtung 1 ist ein 90°-Umlenkgetriebe, insbesondere ein Schneckengetriebe, dessen Schneckenrad über einen Antriebs- oder Wellenzapfen 9 das Abtriebselement 5 antreibt. Eine gehäuseseitige Entlüftungsöffnung 10 wird mit einer gas- und/oder flüssigkeitsundurchlässigen Membran 11 abgedeckt. Die Gehäuseöffnung 4 ist von zwei Anschlussdomen 12 für die Befestigung (Schraubbefestigung) eines Gehäusedeckels 13 flankiert. Hierzu wird der Gehäusedeckel 13 mittels in den Anschlussdomen 12 aufgenommenen Schrauben 14 am Antriebsgehäuse 2 und dort im Bereich der Gehäuseöffnung 4 befestigt. Ein Wellenzapfen 15 einer Motorwelle (Rotorwelle) 16 ist beispielsweise auch im Gehäusedeckel 13 an einer Lagerstelle 17 gelagert oder sitzt dort lediglich ein.

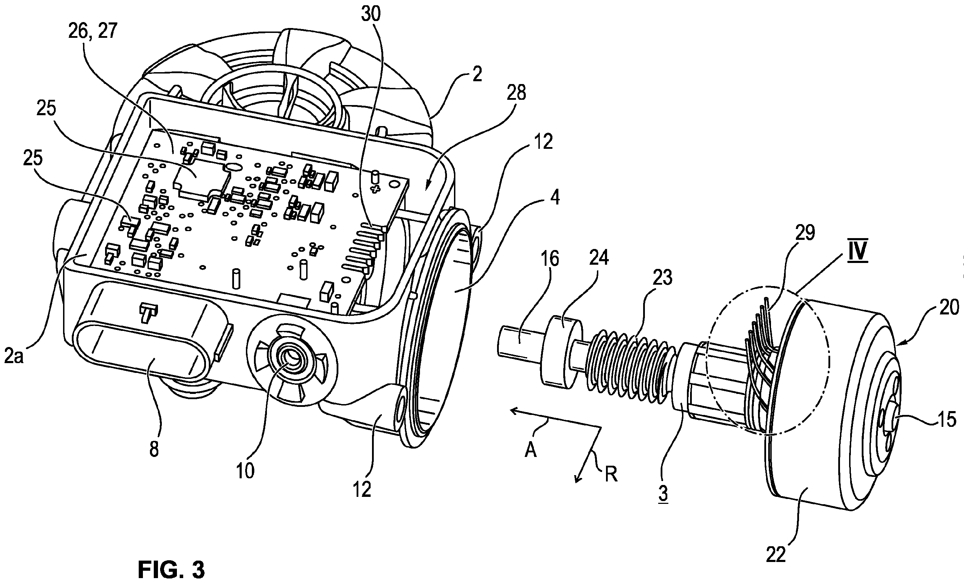

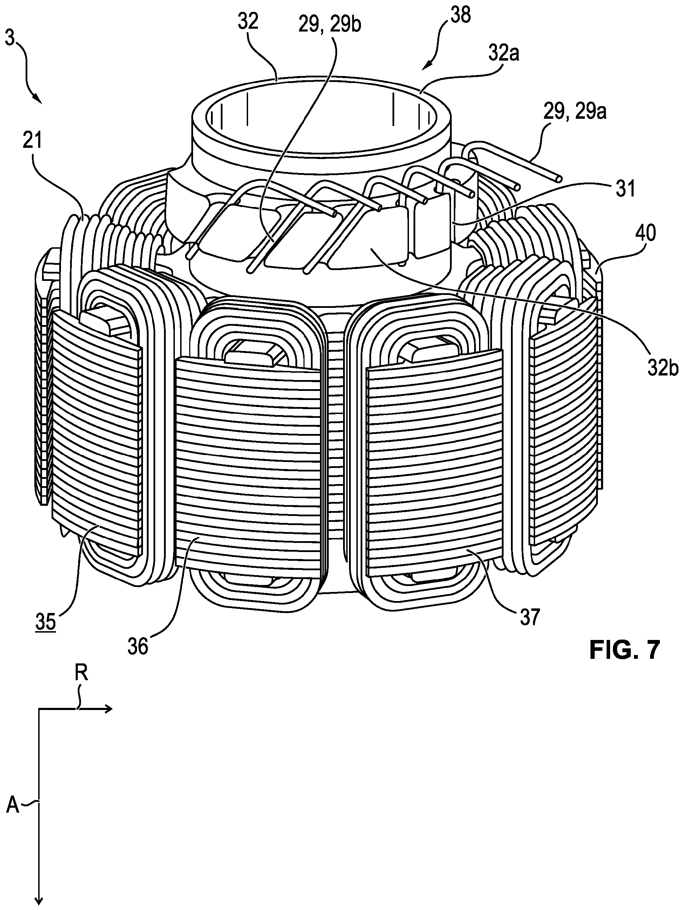

Mit Blick auf die Fig. 3 weist der Elektromotor 3 einen Stator 18 und einen aus Permanentmagneten 19 gebildeten Rotor 20 auf. Der Stator 18 trägt eine nachfolgend einfach als Wicklung bezeichnete Stator- oder Drehfeldwicklung 21 (Fig. 7).

Gemäß Fig. 3 sind die Permanentmagnete 19 des Rotors 20 in einem topfartigen Gehäuse (Rotorgehäuse) 22 innenwandseitig angeordnet. Das Gehäuse 22 ist über einen Wellenzapfen mit der Rotor- bzw. Motorwelle 16 drehfest verbunden und rotiert somit innerhalb des Gehäusedeckels 13 um den im Antriebsgehäuse 2 feststehenden Stator 18 des somit als Außenläufermotor ausgeführten bürstenlosen Elektromotors 3. Die Rotorwelle 16 trägt eine Schnecke 23, welche im Montagezustand mit einem (nicht sichtbaren) Schneckenrad des Getriebes kämmt. Auf der Rotorwelle 16 sitzt zudem wellenfest ein magnetischer Signalgeber (Polrad) 24, der bzw. das zur Bestimmung bzw. Ermittlung der Drehzahl und der Drehrichtung der Rotorwelle 16 mit einem (nicht sichtbaren) Magnetsensor, beispielsweise einem Hall-Sensor, berührungslos zusammenwirkt.

Innerhalb des Antriebsgehäuses 2 befindet sich eine mit elektronischen und/oder elektrischen Bauelementen 25 bestückte Leiterplatte 26 einer Motorelektronik 27. Der Innenraum 28 des Antriebsgehäuses 2 ist hier über eine Gehäuseöffnung 2a zugänglich, welche mittels eines (nicht dargestellten) Gehäusedeckels im Anschluss an die Montage des Getriebes und der Motorelektronik 27 inklusive der Leiterplatte 26 verschlossen wird.

Im Anschluss an die Montage der Leiterplatte 26 wird der Elektromotor 3 über die Gehäuseöffnung 4 in das Antriebsgehäuse 2 eingeschoben, eingeführt bzw. eingesteckt. Die Leiterplatte 26 ist - bezogen auf die eingezeichnete Axialrichtung A und Radialrichtung R - zur Rotorwelle (Motorwelle) 16 radial beabstandet im Antriebsgehäuse 2 montiert. In dieser Position ist das Polrad 24 zum Magnetsensor als einem der Bauteile oder Bauelemente 25 für die berührungslose Drehzahl- und Drehrichtungserkennung der Rotorwelle (Motorwelle) 16 des Elektromotors 3 entsprechend positioniert.

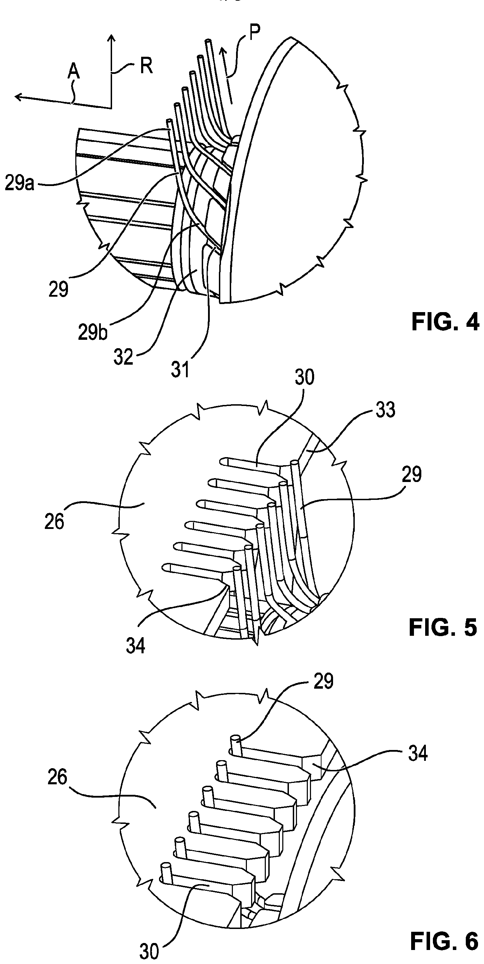

Mit Blick auf die Fig. 4 bis 6 erfolgt im Zuge des Einführens des Elektromotors 3 in das Antriebsgehäuse 2 eine Steck- oder Fügeverbindung von Phasenanschlüssen 29 der Wicklung (Drehfeld- oder Statorwicklung) 21 des Elektromotors 3 mit Anschlussaufnahmen 30 der Leiterplatte 26 innerhalb des Antriebsgehäuses 2. Hierzu sind die Phasenanschlüsse 29 in eine radial orientierte Fügeposition P verbracht, wie in Fig. 4 anhand des Pfeils veranschaulicht.

Von den im Ausführungsbeispiel insgesamt sechs Phasenanschlüssen 29 sind in Fig. 4 der Übersichtlichkeit halber lediglich zwei Phasenanschlüsse mit den Bezugszeichen 29 versehen. Die Axialrichtung A und die Radialrichtung R, welche sich auf die Drehachse des Elektromotors 3 bzw. dessen Rotorwelle 16 bezieht, sind in den Fig. 3 und 4 eingezeichnet.

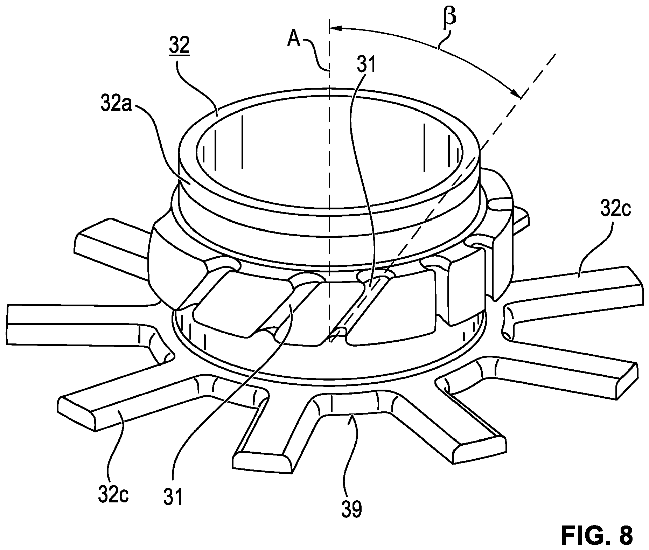

Erkennbar sind die Phasenanschlüsse 29 zumindest mit deren für die Fügeverbindung mit der Leiterplatte 26 vorgesehenen Endabschnitten 29a zueinander parallel verlaufend angeordnet und hierzu in die bestimmungsgemäße Fügeposition P aufgebogen. Die sich zu den einzelnen Spulen der Wicklung 21 des Elektromotors 3 an die Endabschnitte 29a anschließenden Übergangsabschnitte 29b der Phasenanschlüsse 29 verlaufen in Aufnahmenuten 31. Diese sind in einem Führungselement 32 vorgesehen, welches nachfolgend anhand der Fig. 7 und 8 detailliert beschrieben ist.

Die Fig. 5 und 6 zeigen zwei aufeinander folgende Montagepositionen während oder im Zuge des Einführens des Elektromotors 3 über die Gehäuseöffung 4 in das Antriebsgehäuse 2. Gezeigt ist in Fig. 5 die Position der Phasendrähte oder Phasenanschlüsse 29 in der auch der Einsteckrichtung des Elektromotors 3 über die Gehäuseöffnung 4 in das Antriebsgehäuse 2 entsprechenden Axialrichtung A direkt vor den korrespondierenden Anschlussaufnahmen 30 der Leiterplatte 26.

Die Anschlussaufnahmen 30 sind ausgehend von einer den Elektromotor 3 bzw. dessen Stator 18 zugewandten Leiterplattenkante 33, vorzugsweise zueinander parallel verlaufend, in die Leiterplatte 26 eingebracht. Die jeweilige Anschlussaufnahme 30 weist im Bereich dieser Leiterplattenkante 33 eine Einführschräge 34 auf. Hierdurch ist im Zuge der auch automatisierbaren Montage des Elektromotors 3 ein zuverlässiges, insbesondere fehlersicheres, Einführen der Phasenanschlüsse 29 in die schlitzförmigen Anschlussaufnahmen 30 der Leiterplatte 26 sichergestellt.

Fig. 6 zeigt denjenigen Montageendzustand, bei welchem die Phasenanschlüsse 29 in die schlitzförmigen Anschlussaufnahmen 30 in der bestimmungsgemäßen Endposition aufgenommen sind. In dieser Endposition werden die Phasenanschlüsse 29 in nicht näher dargestellter Art und Weise an entsprechenden Anschlussstellen auf der Leiterplatte 21 verlötet.

Fig. 7 zeigt in perspektivischer Darstellung den Stator 18 des Elektromotors 3. Der Stator 18 weist einen Statorgrundkörper 35 auf. Dieser ist durch ein Blechpaket aus einzelnen, gestapelten Blechlamellen (Einzelblechen) 36 gebildet. Der Statorgrundkörper 35 ist außenverzahnt, d. h. die einzelnen Statorzähne 37 verlaufen (radial) sternförmig nach außen. Auf die Statorzähne 37 des Statorgrundkörpers 35 ist die Wicklung (Stator-/Drehfeldwicklung) 21 in Form einzelner Spulen (oder Doppelspulen) aufgebracht. Die Spulenenden bilden die Phasenanschlüsse 29 mit deren beiden Abschnitten 29a und 29b.

Der Statorgrundkörper 35 weist eine zentrale Wellendurchführung 38 für die Rotorwelle 16 auf. Diese Wellendurchführung 38 ist in dem Führungselement 32 in Axialrichtung A mit dieser fluchtend weitergeführt. Das Führungselement 32 weist einen hülsenförmigen Führungsschaft 32a auf. In diesen sind am Außenumfang 32b die Aufnahmenuten 31 vorgesehen, in welchen die Phasenanschlüsse 29 mit deren jeweiligem Übergangsabschnitt 29b einliegen. Auf diese Weise werden die Phasenanschlüsse 29 in deren bestimmungsgemäße Fügeposition P verbracht und dort gehalten.

Von den im Ausführungsbeispiel insgesamt sechs (6) Phasenanschlüssen 29 werden bei einer dreiphasigen Wicklung (Drehfeld- oder Statorwicklung) 21 drei Phasenanschlüsse 29 leiterplattenseitig zu der gewünschten Verschaltung, beispielsweise einer Stern- oder Dreieckschaltung, untereinander bzw. miteinander elektrisch verbunden. Jede der drei Phasenwicklungen kann eine Anzahl von auf den Statorgrundkörper 35 aufgebrachten Statorspulen oder Spulenpaaren (Doppel- oder Mehrfachspulen) aufweisen, die dann jeweils zwei Spulen- oder Phasenenden bilden, welche als Phasenanschlüsse 29 zur gewünschten Verschaltung auf der Leiterplatte 26 kontaktiert werden. Drei dieser Phasenanschlüsse 29 sind zur Bestromung der jeweiligen Phase (Phasenwicklung) auf der Leiterplatte 26 über den Anschlussstecker 6 mit entsprechenden Leitungen 7 elektrisch verbunden.

Fig. 8 zeigt das Führungselement 32 in perspektivischer Darstellung. An den hülsen- bzw. zylinderförmigen Führungsschaft 32a sind an der in Fig. 8 unteren Hülsenstirnseite 39 in Radialrichtung R verlaufende Abdeckstege 32c angeformt. Mit diesen Abdeckstegen 32c liegt das Führungselement 32 auf dem Statorgrundkörper 35 stirnseitig auf und stützt sich dabei an der entsprechenden, in Fig. 7 oberen Stirnseite 40 des Statorgrundkörpers 35 ab. Die Abdeckstege 32c liegen in dieser Montageposition auf den entsprechenden Abschnitten der Statorzähne 37 auf. In diesem Montagezustand wird die Wicklung 21 auf den Statorgrundkörper 35 aufgebracht.

Der Winkel β zur parallel zur Drehachse des Rotors 16 verlaufenden Axialrichtung A kann zwischen 20° und 50° betragen. Im Ausführungsbesipiel beträgt der Winkel β zwischen 40° und 50°, vorzugsweise 45°. Dadurch wird eine besonders vorteilhafte Orientierung und Positionierung der Phasenanschlüsse 29 erreicht.

Wesentlich ist hierbei, dass eine fertigungsgerechte Abwinklung der Phasenanschlüsse 29 bzw. der Endabschnitt 29a gegeben ist bzw. erfolgen kann.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

So stellt der, insbesondere als Außenläufermotor ausgebildete, Elektromotor 3 mit einem Stator 18 und mit einem Rotor 20 mit einer Rotorwelle 16 sowie mit einer Motorelektronik 27 mit einer Leiterplatte 26 eine eigenständige Erfindung dar. Dabei weist der Stator 18 einen Statorgrundkörper 35 mit einer Anzahl von sternförmig angeordneten Statorzähne 37 auf, die mit der Statorwicklung 21 bewickelt sind, wobei eine Anzahl von Phasenanschlüssen 29 der Statorwicklung 21 in eine, insbesondere radial orientierte, Fügeposition P geführt sind, und wobei die Leiterplatte 26 eine der Anzahl der Phasenanschlüsse 29 entsprechende Anzahl von Anschlussaufnahmen 30 aufweist, in welche die Phasenanschlüsse 29 aufgenommen oder aufnehmbar sind. Die Anschlussaufnahmen 30 sind vorzugsweise schlitzförmig, können jedoch auch lochartig ausgeführt sein.

Zudem kann die beschriebene Lösung nicht nur in dem speziell dargestellten Anwendungsfall zum Einsatz kommen, sondern auch in ähnlicher Ausführung bei anderen Kraftfahrzeug-Anwendungen, wie zum Beispiel bei Tür- und Heckklappensystemen, bei Fahrzeugschlössern, bei verstellbaren Sitz- und Innenraumsystemen sowie bei weiteren elektrischen Antrieben, Steuerungen, Sensoren und deren Anordnung im Fahrzeug.

### Bezugszeichenliste

- 1: Antriebsvorrichtung
- 2: Antriebsgehäuse
- 2a: Gehäuseöffnung
- 3: Elektromotor
- 4: Gehäuse-/Einschuböffnung
- 5: Abtriebselement
- 6: Anschlussstecker
- 7: Anschlussleitung
- 8: Anschlussaufnahme
- 9: Antriebs-/Wellenzapfen
- 10: Entlüftungsöffnung
- 11: Membran
- 12: Anschlussdom
- 13: Gehäusedeckel
- 14: Schraube
- 15: Wellenzapfen
- 16: Motor-/Rotorwelle
- 17: Lagerstelle
- 18: Stator
- 19: Permanentmagnet
- 20: Rotor
- 21: Stator-/Drehfeld-/Wicklung
- 22: Rotor-/Gehäuse
- 23: Schnecke
- 24: Signalgeber/Polrad
- 25: Bauelement
- 26: Leiterplatte
- 27: Motorelektronik
- 28: Innenraum
- 29: Phasenanschluss
- 29a: Endabschnitt
- 29b: Übergangsabschnitt
- 30: Anschlussaufnahme
- 31: Aufnahmenut
- 32: Führungselement
- 32a: Führungsschaft
- 32b: Außenumfang
- 32c: Abdeck-/Stützsteg
- 33: Leiterplattenkante
- 34: Einführschräge
- 35: Statorgrundkörper
- 36: Blechlamelle/Einzelblech
- 37: Statorzahn
- 38: Wellendurchführung
- 39: Hülsenstirnseite
- 40: Stirnseite

- A: Axialrichtung
- R: Radialrichtung
- P: Fügeposition

## Patentansprüche

1. Antriebsvorrichtung (1) eines elektromotorischen Verstellantriebs eines Kraftfahrzeugs, aufweisend ein Antriebsgehäuse (2) mit darin montierbarem bürstenlosem Elektromotor (3) mit einer Statorwicklung (21) und mit einem Rotor (20) mit einer mit einem Getriebe gekoppelten oder koppelbaren Rotorwelle (16) sowie mit einer Motorelektronik (27) mit einer Leiterplatte (26),
- wobei der Elektromotor (3) ein Außenläufermotor ist und der Stator (18) einen außenverzahnten Statorgrundkörper (35) mit einer Anzahl von sternförmig angeordneten und mit der Statorwicklung (21) bewickelten Statorzähnen (37) sowie eine zentrale Wellendurchführung (38) für die Rotorwelle (16) aufweist,
- wobei der Rotor (20) ein den Statorgrundkörper (35) umgebendes und mit der Rotorwelle (16) gekoppeltes Rotorgehäuse (22) mit darin angeordneten Permanentmagneten (19) aufweist,
- wobei das Antriebsgehäuse (2) eine Gehäuseöffnung (4) aufweist, über welche der Elektromotor (3) in das Antriebsgehäuse (2) einführbar ist,
- **dadurch gekennzeichnet, dass** eine Anzahl von Phasenanschlüssen (29) der Statorwicklung (21) in eine radial orientierte Fügeposition (P) geführt ist,
- wobei die Leiterplatte (26) eine der Anzahl der Phasenanschlüsse (29) entsprechende Anzahl von Anschlussaufnahmen (30) aufweist, welche im Zuge des Einführens des Elektromotors (3) in das Antriebsgehäuse (2) die Phasenanschlüssen (29) aufnehmen, und
- dass die Anschlussaufnahmen (30) für die Phasenanschlüsse (29) - bezogen auf die Motorachse des Elektromotors (3) - als axial verlaufende Führungsschlitze ausgebildet sind, die sich ausgehend von einer dem Statorgrundkörper (35) zugewandten Leiterplattenkante (33) in die Leiterplatte (26) hinein erstrecken.

2. Antriebsvorrichtung (1) nach Anspruch 1,
**dadurch gekennzeichnet,**
**dass** an einer Stirnseite (40) des Statorgrundkörpers (35) ein hülsenförmiges Führungselement (32) vorgesehen ist, welches am Außenumfang (32b) eine Anzahl von Aufnahmenuten (31) aufweist, in welchen die Phasenanschlüsse (29) abschnittsweise einliegen.

3. Antriebsvorrichtung (1) nach Anspruch 2,
**dadurch gekennzeichnet,**
**dass** die Aufnahmenuten (31) zur Mittelachse (A) des Statorgrundkörpers (35) in einem Winkel (β) zwischen 20° und 70°, insbesondere zwischen 30° und 60°, vorzugsweise zwischen 40° und 50°, besonders bevorzugt zwischen 45° und 50°, schräg verlaufend orientiert sind.

4. Antriebsvorrichtung (1) nach Anspruch 2 oder 3,
**dadurch gekennzeichnet,**
**dass** das Führungselement (32) eine Anzahl von radial verlaufenden Abdeckstegen (32c) aufweist, welche stirnseitig zwischen einer entsprechenden Anzahl von Statorzähnen (37) und der Statorwicklung (21) einliegen.

5. Antriebsvorrichtung (1) nach einem der Ansprüche 1 bis 4,
**dadurch gekennzeichnet,**
**dass** die Leiterplatte (26) innerhalb des Antriebsgehäuses (2) radial beabstandet zur Rotorwelle (16) angeordnet ist.

6. Antriebsvorrichtung (1) nach einem der Ansprüche 1 bis 5,
**dadurch gekennzeichnet,**
**dass** die Anschlussaufnahmen (30) für die Phasenanschlüsse (29) mit in die Leiterplatte (26) eingebrachten Einführschrägen (34) ausgeführt sind.

7. Antriebsvorrichtung (1) nach einem der Ansprüche 1 bis 6,
**dadurch gekennzeichnet,**
**dass** die Phasenanschlüssen (29) in deren Fügeposition (P), insbesondere in einer gemeinsamen Fügeebene, zueinander parallel verlaufend orientiert sind.

## Claims

1. Drive device (1) of an electromotive adjusting drive of a motor vehicle, having a drive housing (2) with a brushless electric motor (3), which can be mounted therein, and with a stator winding (21) and a rotor (20) with a rotor shaft (16), which is coupled or can be coupled to a gear unit, and having motor electronics (27) with a printed circuit board (26),
- wherein the electric motor (3) is an external rotor motor and the stator (18) has an externally toothed stator base body (35) with a number of stator teeth (37) arranged in a star shape and wound with the stator winding (21), and a central shaft bushing (38) for the rotor shaft (16),
- wherein the rotor (20) has a rotor housing (22) surrounding the stator base body (35) and coupled to the rotor shaft (16) with permanent magnets (19) arranged therein,
- wherein the drive housing (2) has a housing opening (4), through which the electric motor (3) can be inserted into the drive housing (2),
characterizied in that
- a number of phase connections (29) of the stator winding (21) are guided into a radially oriented joining position (P),
- wherein the printed circuit board (26) has a number of connection sockets (30) corresponding to the number of phase connections (29), which receive the phase connections (29) in the course of insertion of the electric motor (3) into the drive housing (2), and that
- the connection sockets (30) for the phase connections (29) - with respect to the motor axis of the electric motor (3) - are configured as axially running guide slots which, starting from a printed circuit board edge (33) facing the stator base body (35), extend into the printed circuit board (26).

2. Drive device (1) according to claim 1,
characterizied in
that a sleeve-shaped guide element (32) is provided on an end face (40) of the stator base body (35), which guide element (32) has a number of receiving slots (31) on the outer circumference (32b), in which receiving slots (31) the phase connections (29) are inserted in sections.

3. Drive device (1) according to claim 2,
characterizied in
that the receiving slots (31) are oriented obliquely to the central axis (A) of the stator base body (35) at an angle (β) of between 20° and 70°, in particular between 30° and 60°, preferably between 40° and 50°, particularly preferably between 45° and 50°.

4. Drive device (1) according to claim 2 or 3,
characterizied in
that the guide element (32) has a number of radially extending cover webs (32c), which are inserted on the end face between a corresponding number of stator teeth (37) and the stator winding (21).

5. Drive device (1) according to one of claims 1 to 4,
characterizied in
that the printed circuit board (26) is arranged within the drive housing (2) at a radial distance from the rotor shaft (16).

6. Drive device (1) according to one of claims 1 to 5,
characterizied in
that the connection sockets (30) for the phase connections (29) are designed with insertion slopes (34) made in the printed circuit board (26).

7. Drive device (1) according to one of claims 1 to 6,
characterizied in
that the phase connections (29) are oriented parallel to each other in their joining position (P), in particular in a common joining plane.

## Revendications

1. Dispositif d'entraînement (1) d'un entraînement de réglage électromoteur d'un véhicule automobile, comprenant un boîtier d'entrainement (2) avec un moteur électrique sans balais (3) pouvant être monté dans celui-ci, avec un enroulement de stator (21) et avec un rotor (20) avec un arbre de rotor (16) couplé ou pouvant être couplé à un engrenage, ainsi qu'avec une électronique de moteur (27) avec une carte à circuits imprimés (26),
- dans lequel le moteur électrique (3) est un moteur à rotor extérieur et le stator (18) comprend un corps de base de stator (35) à denture extérieure avec un certain nombre de dents de stator (37) disposées en étoile et enroulées avec l'enroulement de stator (21) ainsi qu'un passage d'arbre central (38) pour l'arbre de rotor (16),
- dans lequel le rotor (20) comprend un boîtier de rotor (22) entourant le corps de base du stator (35) et couplé à l'arbre du rotor (16), avec des aimants permanents (19) disposés à l'intérieur,
- dans lequel le boîtier d'entraînement (2) comprend une ouverture de boîtier (4), par laquelle le moteur électrique (3) peut être introduit dans le boîtier d'entraînement (2),
**caractérisé en ce que**
- un certain nombre de connexions de phase (29) de l'enroulement de stator (21) est guidé dans une position d'assemblage (P) orientée radialement,
- dans lequel la carte à circuits imprimés (26) comprend un certain nombre de logements de raccordement (30) correspondant au nombre de connexions de phase (29), qui reçoivent les connexions de phase (29) au cours de l'introduction du moteur électrique (3) dans le boîtier d'entraînement (2), et que
- les logements de raccordement (30) pour les connexions de phase (29) - par rapport à l'axe du moteur électrique (3) - sont réalisés sous la forme de fentes de guidage s'étendant axialement, qui s'étendent dans la carte à circuits imprimés (26) à partir d'un bord (33) de la carte à circuits imprimés tourné vers le corps de base (35) du stator.

2. Dispositif d'entraînement (1) selon la revendication 1,
**caractérisé en ce**
**qu'**un élément de guidage (32) en forme de douille est prévu sur une face frontale (40) du corps de base (35) du stator, quel élément de guidage (32) comprend sur la périphérie extérieure (32b) un certain nombre de rainures de réception (31), dans lesquelles les connexions de phase (29) sont insérées par sections.

3. Dispositif d'entraînement (1) selon la revendication 2,
**caractérisé en ce**
**que** les rainures de réception (31) sont orientées obliquement par rapport à l'axe central (A) du corps de base (35) du stator selon un angle (β) compris entre 20° et 70°, en particulier entre 30° et 60°, de préférence entre 40° et 50°, de manière particulièrement préférée entre 45° et 50°.

4. Dispositif d'entraînement (1) selon la revendication 2 ou 3,
**caractérisé en ce**
**que** l'élément de guidage (32) comprend un certain nombre de nervures de recouvrement (32c) s'étendant radialement, qui s'insèrent frontalement entre un certain nombre correspondant de dents de stator (37) et l'enroulement de stator (21).

5. Dispositif d'entraînement (1) selon l'une des revendications 1 à 4,
**caractérisé en ce**
**que** la carte de circuit imprimé (26) est disposée à l'intérieur du boîtier d'entraînement (2) à une distance radiale de l'arbre de rotor (16).

6. Dispositif d'entraînement (1) selon l'une des revendications 1 à 5,
**caractérisé en ce**
**que** les logements de raccordement (30) pour les connexions de phase (29) sont réalisés avec des biseaux d'introduction (34) ménagés dans la carte à circuits imprimés (26).

7. Dispositif d'entraînement (1) selon l'une des revendications 1 à 6,
**caractérisé en ce**
**que** les connexions de phase (29) sont orientées parallèlement les uns aux autres dans leur position d'assemblage (P), en particulier dans un plan d'assemblage commun.
